# EUROPEAN PATENT APPLICATION

(11) **EP 4 685 891 A1**
(43) Date of publication of application: **28.01.2026**
(21) Application number: 24190075.2
(22) Date of filing: 22.07.2024
(51) Int. Cl.: H01M 8/247, H01M 8/248

(54) **SUPPORT ASSEMBLY FOR A FUEL CELL STACK**

(71) Applicant: Aerostack GmbH, 72581 Dettingen an der Erms (DE)
(72) Inventor: BHAT-HIRE, Jitendra, 72581 Dettingen an der Erms (DE); EGGERT, Dominik, 72581 Dettingen an der Erms (DE); EVERTZ, Jörg, 72581 Dettingen an der Erms (DE); ROBERS, Leon, 72581 Dettingen an der Erms (DE)
(74) Representative: LKGLOBAL Partnerschaftsgesellschaft mbB

(57) **Abstract**

The present invention relates to a support assembly (100) for a fuel cell stack (101), comprising a retainer plate (104) comprising a mounting end (105) configured to mount the retainer plate (104) to a base plate (102) to arrange the retainer plate (104) parallel to a stacking direction (106) of the fuel cell stack (101) when the fuel cell stack (101) is disposed on the base plate (102); a connecting end (108) disposed at a predetermined distance from the mounting end (105) a stack mount (109) configured to attach to the fuel cell stack (101) between a first end (103-1) and a second end (103-2) of the fuel cell stack (101)., and attach to the connecting end (108) to connect the retainer plate (104) to the fuel cell stack (101) at the connecting end (108); wherein the retainer plate (104) is delimited by the mounting end (105) and the connecting end (108).

## Description

The present invention relates to a support assembly for a fuel cell stack. Specifically, the present invention relates to a side surface support configured to stabilize the fuel cell stack against deformation.

### TECHNICAL BACKGROUND

One of the significant challenges in fuel cell stack design is ensuring structural integrity and stability during operation. The fuel cell stack must withstand various mechanical stresses, including those induced by thermal cycling, vibrations, gravity, and the inherent pressure of the electrochemical reactions. To address these challenges, support assemblies are employed to provide necessary support and maintain the alignment and compression of the stack.

Traditional support assemblies often utilize end plates and tie rods to compress the stack from both ends, ensuring uniform pressure distribution. However, this approach may only provide limited lateral support, especially for larger stacks.

WO 2023 / 180 034 A1 discloses a fuel cell stack with a support structure arranged transversely to the stacking direction. This structure prevents lateral displacement and deformation of the fuel cells. The structure includes elements that apply pre-tension to the fuel cells by clamping to the top end and bottom end of the fuel cell stack.

### SUMMARY

The objective addressed by the present invention is to provide a support assembly for a fuel cell stack that ensures enhanced lateral stability and structural integrity while simplifying the assembly and maintenance processes.

The present invention seeks to improve upon conventional designs by introducing a support assembly that provides lateral support to the fuel cell stack while being centrally connected to the fuel cell stack and to only one end of the fuel cell stack. This configuration aims to enhance the structural stability of the stack, reduce lateral movement, reduce mechanical stress, and/or simplify the assembly process.

According to a first aspect the present invention relates to a support assembly for a fuel cell stack.

The assembly can comprise a retainer plate, in particular for supporting the fuel cell stack against deformation. The retainer plate can comprise a mounting end configured to mount the retainer plate to a base plate, in particular adjacent to the fuel cell stack and/or parallel to a stacking direction of the fuel cell stack, preferably when the fuel cell stack is disposed on the base plate. The retainer plate can further comprise a connecting end disposed at a predetermined distance from the mounting end. The predetermined position can define a predetermined distance along the stacking direction below a fuel stack height of the fuel cell stack along the stacking direction.

Additionally, the retainer plate can comprise a stack mount configured to attach to the fuel cell stack, in particular between a first end and a second end of the fuel cell stack. Further, the stack mount can be configured to attach to the connecting end to connect the retainer plate to the fuel cell stack at the connecting end.

The stack mount can be configured to attach the fuel cell stack below a certain cell height along the stacking direction when the fuel cell stack is received by the base plate.

The mounting end can be configured to mount the retainer plate to the base plate adjacent to the fuel cell stack. The stack mount can be configured to attach to the connecting end, preferably to connect the retainer plate to the fuel cell stack at the connecting end, in particular in a load-bearing manner.

The height of the retainer plate along the stacking direction can be smaller than the height of the fuel cell stack. The mounting end, respectively the base plate, and the connecting end can be the single contact points of the retainer plate with the fuel cell stack, i.e., the mounting end, respectively the base plate, and the connecting end may be the only points of contact with the fuel cell stack. A height of the retainer plate can be defined such that the connecting end is disposed adjacent to a center, e.g., a center region, of the fuel cell stack. The retainer plate can be delimited by the mounting end and the connecting end. Preferably, the support assembly relies only on the connection between mounting end and base plate to provide structural support to the fuel cell stack. The support assembly may not require an additional mounting point at the second end, i.e., the top of the fuel cell stack.

Each of the fuel cells can comprise corresponding components, i.e. for example bipolar plates, electrolyte layers, sealing layers, gas diffusion layers, membrane layers and catalyst layers. A fuel cell stack can comprise a plurality of fuel cells, where the individual fuel cells of the plurality of fuel cells are stacked on top of one another in such a way that the individual fuel cells form a stacked arrangement of fuel cells which is held together between two end plates, e.g. the first end of the fuel cell stack and the second end of the fuel cell stack.

Pressing can be achieved by a defined compressive load, in particular between the first end and the second end. The fuel cell stack can be subject to vibrational, gravitational, centrifugal and/or other forces. Specifically forces having components perpendicular to the stacking direction of the fuel cell stack. These external forces can cause relative movements of the individual cells in the fuel cell stack, specifically movements perpendicular to the stacking direction. This can lead to sagging and/or bending of the fuel cell stack, particularly if the fuel cell stack is positioned horizontally, i.e., a constant gravitational force acts on the fuel cell stack. Sagging can be defined as a deflection orwarping of the fuel cell stack, where each fuel cell of the fuel cell stack is displaced perpendicular to the stacking direction with respect to its adjacently positioned fuel cells. A maximum displacement can occur around the center of the fuel cell stack. The maximum displacement of the fuel cell stack can depend on the stiffness of the fuel cell stack. Thus, the maximum displacement may not necessarily occur at the center and may depend on a stiffness distribution and/or a friction force distribution between cells or layers throughout the fuel cell stack. It can be assumed that the fuel cell stack has a uniform weight distribution along the length of the fuel cell stack and the stiffness around the center is lower compared to other regions of the cell.

A deformation of the fuel cell stack can also be any other deformation from the initial stacking placement. The support assembly can effectively prevent deformations of the fuel cell stack. The individual fuel cells can form a uniform column with uniformly positioned end surfaces, respectively edges, i.e. the column forms essentially flat surfaces in an unloaded state of the fuel cell stack. The applied external force can lead to a large number of micro-movements, which can in turn lead to a global deformation of the fuel cell stack. The applied force can be a combination of static forces, e.g., gravity, and dynamic forces, e.g., vibrations. It can be assumed that both forces are applied simultaneously. Micromovements can be more likely to occur if a combination of static and dynamic forces acts on the fuel cell stack. However, corresponding displacements can also occur if only dynamic forces have components perpendicular to the stacking direction, e.g., the fuel cell stack is aligned parallel with respect to gravity. In particular, shock and vibration conditions in aviation applications can lead to substantial deformation of the fuel cell stack. The deformation can impede the function of the fuel cell stack or lead to a failure of the fuel cell stack like leakage and/or higher stresses on the membrane leading to cracking.

The support assembly can form a lateral support structure preventing deformation or at least reducing the extent of a deformation of the fuel cell stack. The support assembly can be configured to act laterally on the arrangement of the fuel cells, so that a support load is applied to the fuel cell stack or its components. The support assembly can support the fuel cell stack, respectively any arrangement of fuel cells in a direction transverse or perpendicular to the stack direction by preventing movement of the fuel cells relative to one another perpendicular to the stacking direction, preferably by means of static support, which acts against the arrangement of fuel cells and/or on one or more lateral surfaces of the arrangement of fuel cells.

The base plate can be an end plate of the fuel cell stack. Herein, the fuel cell stack can be supported between two end plates. Alternatively, the base plate can be configured to attach to a corresponding end plate of the fuel cell stack. The end plates can be configured to hold the fuel cells along the stacking direction, specifically apply or transmit a compressive force along the stacking direction onto the fuel cells.

The base plate can comprise mounting means configured to receive a base fastener, preferably at least two base fasteners. Thereto, the support assembly can comprise base fasteners configured to fixedly attach the retainer plate to the base plate. The retainer plate can be fixedly attached to the base plate via the base fastener engaging with the mounting means. For example, the retainer place can be screwed to the base plate. In an advantageous embodiment the base connectors can be configured to engage with the base plate in a direction angled with respect to the stacking direction, e.g., perpendicular to the stacking direction. Herein, the attachment direction may form a surface normal of the corresponding side surface of the fuel cell stack. For example, the retainer plate can be attached to a side surface of the base plate. Additionally or alternatively, the base connector can be configured to engage with the base plate in a direction parallel with respect to the stacking direction. For example, the retainer plate can be attached to a top surface of the base plate. The attachment direction can be defined based on optimal installation space usage and/or mounting means accessibility. The base plate can laterally extend past the fuel cell stack to provide a mounting surface for the mounting end. Mounting parallel to the stacking direction can achieve the advantage of a rigid mounting of the retainer plate to the base plate, in particularwhen the base plate has a reduced thickness decreasing a corresponding vertical mounting surface area and/or decreasing the installation space for mounting means, e.g., screw holes.

The retainer plate can be a support element which limits the movement of the fuel cells in at least one direction transverse and/or perpendicular to the stacking direction. Thereby, the retainer plate can be configured to counteract and/or prevent a displacement of the plurality of fuel cells in at least one direction transverse and/or perpendicular to the stacking direction. The displacement of the plurality of fuel cells can relate to relative displacements of the fuel cells with respect to adjacent fuel cells, in particular orthogonal to the stacking direction. The displacement can be irregular or regular. A regular displacement can relate to the individual cell displacements adhering to a global shape of the fuel cell stack. For example, the fuel stack can form a bent shape towards a specific direction. The bending direction can be an arbitrary direction parallel to the stacking direction. The fuel cell stack can be subject to complex deformations, such as overlayed bending in more than one direction, wave like displacements, linearly sheared displacements, rotationally sheared displacements, e.g., the fuel cells are rotated with respect to adjacent cells with a rotation axis parallel to the stacking direction. The fuel cell stack can show any combination of the mentioned deformations. Further, the fuel cell stack can be irregularly displaced such that there is no or reduced correlation of the displacements of the cells.

The retainer plate can be configured to extend between opposite sides of the fuel cell stack and/or to press on a side surface of the corresponding side of the fuel cell stack in such a way that the arrangement of the fuel cells or the individual fuel cells are stabilized to prevent displacements of the individual cells within the fuel cell stack. The retainer plate can be configured to form a one-sided support structure, i.e., only being fixedly attached to one end of the fuel cell stack. Thereby, the fuel cell stack can be efficiently supported, preferably at the position of maximal displacement and/or the weight and/or installation space of the support assembly can be reduced.

The retainer plate can be configured to centrally fit between a set of tensioning elements configured to apply a tensile force on the fuel cell stack along the stacking direction. The retainer plate can further be configured to direct forces applied to the connecting end to the mounting end. In a further embodiment, the retainer place can be configured to attach to a tensioning element.

The retainer plate can further be shaped to transfer forces from a single contact point or contact surface at the connecting end with the fuel cell stack to a laterally extended contact surface and/or at least two spaced apart contact points or contact surfaces at the mounting end. Preferably, the contact points and/or contact surface at the mounting end can be in contact with the base plate, in particular in a force-transmitting manner.

The retainer plate can comprise a support rib extending along the stacking direction and protruding from a side surface of the retainer plate. The support rib can be configured to stiffen the retainer plate, e.g., increase a rigidity of the retainer plate to forces applied perpendicular to the stacking direction.

The connecting end can be shaped partly triangular to bridge between the single contact point or contact surface to the fuel cell stack and the contact surface or contact points at the mounting end. Thereby, the connecting end can achieve maximal support while reducing the required material and/or installation space.

The connecting end can form a boundary of the retainer plate along the stacking direction, i.e., towards the second end of the fuel cell stack. The connecting end can be disposed spaced apart from the corresponding adjacent side surface of the fuel cell stack.

The connecting end being disposed at a predetermined position between the first end of the fuel cell stack and a second end of the fuel cell stack along the stacking direction, can define an in-between position between the first end and the second end. As such, the retainer plate can form a mounting arm extending to the in-between position to support the fuel cell stack at the in-between position, which preferably is a middle position, i.e., a center of the fuel cell stack or a position close to the center of the fuel cell stack.

The stack mount can be configured to attach to a corresponding attachment means of the fuel cell stack. Preferably, in a form fitting, form locking and/or force locking manner. The stack mount can be configured to attach to the fuel cell stack by means of clamping, snap locking, friction contacting, adhesion and/or suction. Alternatively, the stack mount can be integrally formed with a part of the fuel cell stack. For example, the stack mount can be integrally formed with a middle plate of the fuel cell stack.

The stack mount can be configured to fixedly attach to the fuel cell stack, in particular to attach removably to the fuel cell stack. The stack mount can form attachment means configured to connect the fuel cell stack to the retainer plate, in particular in a force-transmitting and/or dampening manner.

The stack mount can be configured to attach to a subset of fuel cells of the plurality of fuel cells of the fuel cell stack. The fuel cell stack, respectively the fuel cells can comprise attachment means configured to receive the stack mount. For example, the fuel cell stack and/or each individual fuel cell can comprise a protrusion, wherein the stack mount can be configured to attach to the protrusion. The protrusion can extend perpendicular to the stacking direction towards the retainer plate.

The stack mount can comprise a load spreading element configured to connect a set of fuel cells. Thereby, the load spreading element can be configured to apply the structural support by the retainer plate along at least a predefined distance between the first end and the second end of the fuel cell stack, preferably along the complete length of the fuel cell stack.

The stack mount can be flexibly attached to the connecting end. The stack mount and the connecting end can be connected such that a relative position between the stack mount and the connecting end can vary, in particular vary a predetermined maximum range in the stacking direction and/or a further predetermined maximum range perpendicular to the stacking direction. The connection between the stack mount and the connecting end can be partially elastic to absorb vibrations and/or shock loads. Further, the stack mount can be incompressibly connected to the retainer plate such that forces applied to the stack mount are transferred to the retainer plate.

In a further embodiment, the assembly can comprise the base plate which can be configured to receive a first end of the fuel cell stack. The connecting end can be disposed adjacent to a side surface of the fuel cell stack when the first end is received by the base plate. Further, the connecting end can be disposed between the first end of the fuel cell stack and a second end of the fuel cell stack along the stacking direction.

The base plate can be configured to provide a mounting surface to receive the retainer plate. Preferably, the base plate and the retainer plate, specifically the mounting end can engage in a form fitting manner to provide a stiff coupling between the retainer plate and the base plate. The side surface of the fuel cell stack can extend between the first end of the fuel cell and the second end of the fuel cell stack. The side surface can be part of a side wall formed by the stacked fuel cells. Thereto the side surface can be formed by the stacked edges of the fuel cells.

The support assembly can comprise a plurality of retainer plates, wherein a first retainer plate of the plurality of retainer plates can be disposed adjacent to a first side surface of the fuel cell stack and a second retainer plate can be disposed adjacent to a second side surface of the fuel cell stack. The first side surface and the second side surface can be disposed opposite to one another. Alternatively, the first side surface and the second side surface can be disposed adjacent to one another, preferably forming a side edge of the fuel cell stack. Thus, the first retainer plate and the second retainer plate can be configured to support the fuel cell stack along directions perpendicularto one another.

The protrusion on the fuel cell can be on both sides where the two retainer plates interface the fuel cell stack.

In a further embodiment, the plurality of retainer plates can comprise a first, second, third and fourth retainer plate, wherein a retainer plate is disposed adjacent to each side surface of the fuel cell stack.

Correspondingly, all features relating to a single retainer plate can apply to the plurality of retainer plates, respectively to each pair of fuel cell stack side wall and the corresponding adjacently positioned retainer plate.

In a further embodiment, the support assembly can comprise a connector element, which can be configured to attach to the connecting end. The connecting end can comprise a slide mount configured to slidably receive the connector element. The slide mount and the connector element can be interlocking forming a positive locking connection where the connector element is slidable along the stacking direction.

Preferably, the connecting end can receive the connector element along a sliding axis in the stacking direction. Alternatively, the sliding axis can be angled with respect to the stacking direction. The sliding axis can be oriented such that the connector element when connected to the connecting end can vary in position with respect to the stacking direction. With an angled sliding axis, the connector element may also vary its position laterally, i.e., parallel to a side surface of the fuel cell stack and perpendicular to the stacking direction. The connector element can account for positional variations of an attachment point, e.g., a middle plate of the fuel cell stack. For example, due to manufacturing and/or assembly tolerances, the attachment point can vary in position along the stacking direction. This variation can occur due to a height variation of the complete fuel cell stack. The height variation of the fuel cell stack can be in the range of 1 -10 mm, 5 - 25 mm, or 5 to 50 mm.

The connector element can be configured dually slidable along two perpendicular axes to vary a position of an attachment surface to the fuel cell stack in a plane parallel to the side surface of the fuel cell stack and/or the stacking direction.

The slide mount can comprise a rail element, wherein the connector element comprises a sidewall shaped according to a negative imprint of the rail element. The rail element can be a protrusion extending towards the connector element, and the connector element can comprise a corresponding receptacle to receive the protrusion. The rail element can be configured to prevent the connector element from moving perpendicular to the stacking direction, respectively perpendicular to a sliding direction defined by the rail element. The rail element can be symmetrical to allow corresponding adjacent sidewalls of the connector element to form a fittingly interface with the respective rail.

The slide mount can be configured to extend a predefined distance into the retainer plate, preferably along the stacking direction. The slide distance can be defined according to expected variations of a distance of the fuel cell stack to the connecting end perpendicular to the stacking direction and/or according to expected variations of a position of an attachment surface or an attachment element, e.g., a middle plate, of the fuel cell stack along the stacking direction. According to a further embodiment, the support assembly can comprise a connector fastener configured to fixedly attach the connector element to the slide mount at a predetermined position along the stacking direction.

According to a further embodiment, the support assembly can comprise a link element which can be configured to connect the connecting end and the stack mount. The link element can comprise a first link end which can be configured to attach, preferably pivotably, to the stack mount. Additionally, the link element can comprise a second link end which can be configured to attach, preferably pivotably, to the connector element. The first link end can be configured to pivot with respect to a first rotation axis. The first rotation axis can be oriented angled with respect to the stacking direction, preferably oriented perpendicular to the stacking direction. The second link end can be configured to pivot with respect to a second rotation axis. The second rotation axis can be oriented angled with respect to the stacking direction, preferably oriented perpendicular to the stacking direction. The first and second rotation axis can be perpendicularto one another.

Preferably, the first rotation axis and the second rotation axis can be parallel to one another. In an alternative embodiment, the link element can be partly elastic. Thereto, the link element can be configured to elastically deflect when a force parallel to the stacking direction and/or perpendicular to a surface normal to a corresponding side surface of the fuel cell stack is applied. This can achieve the advantage that the stack mount can move in a plane parallel to the corresponding side surface of the fuel cell stack and forces applied to the fuel cell stack having a direction parallel to a surface normal of the corresponding side surface can be transferred to the retainer plate. The side surface can thus be supported against deformation perpendicular to the stacking direction. Generally, the link element can be configured to movably attach the stack mount to the connecting end and to transfer force components of a force applied to the fuel cell stack to the retainer plate. Specifically, force components with a direction parallel to a surface normal of the side surface of the fuel cell stack adjacent to the retainer plate can be transferred.

The pivotable connection of the link end can comprise a mechanical pivot mechanism and/or a material pivot mechanism, e.g., an elastic material section. In a further embodiment, the first link end and/or the second link end can be ball-rotatable or can be configured to perform a limited ball rotation, where the degree of rotation can be limited to a predetermined angle range.

A distance between the stack mount and the connecting end can be proportional to an angle of the link element with respect to the stacking direction. Thereto, the link element can define distance between the stack mount and the retainer plate.

The combination of the shift mount to movably receive the connector element and the link element connecting the stack mount end the connector element enables an adjustment of the stack mount position along the stacking direction and an adjustment of the position of the stack mount along a surface normal of the adjacent fuel cell stack side surface. Advantageously, these adjustments can be performed independently to one another. For example, the connector element can slide parallel to the stacking direction, while an orientation of the link element and thereby, a distance between the connector element and the stack mount can remain constant. The distance can be defined parallel to a surface normal of the adjacent fuel cell stack side surface. The stack mount can be positioned in an area defined by a length of the slide mount, a maximum rotation angle of the first link end, maximum rotation angle of the second link end. Alternatively, the area can be defined by a maximum elastic deflection of the link element. The link element can further provide a further degree of freedom, e.g., when ball mounted and/or when being configured flexibly in two dimensions. The link element can define an adjustment volume in which the stack mount can be placed while being attached to the retainer plate.

In a further beneficial embodiment, the support assembly can comprise a first axle which can be configured to rotatably connect the first link end with the stack mount. The stack mount can be configured to lock a position of the first axle along the first rotation axis when the stack mount is attached to the fuel cell stack.

The first link end can comprise a first axle receptacle configured to receive the first axle. The first axle can be configured to align the position of the first link end with respect to the stack mount. The stack mount can be configured to receive the first axle along the first rotation axis. Thereto, the stack mount can comprise an axle groove in a plate receptacle configured to receive a middle plate. When the middle plate is received in the plate receptacle the movement of the first axle along the first rotation axis can be prevented or at least limited.

According to a further embodiment, the support assembly can comprise a second axle which can be configured to rotatably connect the second link end with the slide mount. The slide mount can be configured to lock a position of the second axle along the second rotation axis when the connector element is received, preferably at least up to a position of the second axle by the slide mount.

The second link end can comprise a second axle receptacle configured to receive the second axle. The second axle can be configured to align the position of the second link end with respect to the connector element. The connector element can be configured to receive the second axle along the second rotation axis. The connector element can comprise an axle receptacle configured to receive the second axle along the second rotation axis.

The second axle receptacle can be a through-hole having openings facing the slide mount. Thereby, when the connector element is inserted into the slide mount, the openings can be covered, and the second axle locked in position.

The stack mount can comprise a first mounting receptacle which can be configured to receive the first axle, preferably slidably along the first rotation axis, rotatably hold the first axle, and/or receive the first link end along a connecting axis perpendicular to the first rotation axis.

The first mounting receptacle can be configured to limit a rotational movement and/or elastic deformation of the link element, preferably to a predetermined range. Thereby, the link element can be limited to a range of orientations that always comprise a predetermined minimum component parallel to a surface normal of the adjacent fuel cell stack side surface. This can provide the advantage that force components oriented along this axis direction can be transferred to the retainer plate. In other words, the retainer plate can efficiently support any stress components applied to the fuel cell stack along this axis.

The connector element can comprise a second mounting receptacle configured to receive the second axle, in particular slidably, along the second rotation axis, rotatably hold the second axle; and/or receive the second link end along a further connecting axis perpendicular to the second rotation axis. The second mounting receptacle can be configured to limit a rotational movement and/or elastic deformation of the link element, preferably to a predetermined range. The first mounting receptacle and the second mounting receptacle can be configured to jointly realize a limited motion range of the link element. The link element can be configured to movably connect the stack mount to the connector element. With completed assembly, the connector element can be fixedly attached at a predetermined position of the slide mount. The position can be predetermined according to the respective manufacturing and/or assembly deviation in dimensions (length, width, height) of the fuel cell stack mounted to the base plate.

In a further embodiment, the stack mount can comprise a plate receptacle configured to receive a middle plate of the fuel cell stack. The support assembly can further comprise a plate fastener configured to fixedly attach the stack mount to the middle plate. The plate receptacle can be configured to lock a position of the first axle along the first rotation axis when the plate receptacle is mounted to the middle plate.

The middle plate can be a bipolar plate of the fuel cell stack. The middle plate can be a fuel cell stack component configured to attach to the stack mount.

According to an embodiment a set of fuel cells, e.g., a set of corresponding edges adjacent to the retainer plate can form an attachment region for the stack mount. Preferably, the attachment region is located centrally in the fuel cell stack, e.g., at a middle position of the fuel cell stack along the stacking direction.

The link element can be configured to adjust a position of the stack mount relative to the connecting end along the stacking direction and/or perpendicular to the stacking direction. During use the fuel cell stack can move, e.g., micromovements due to vibrations. Forces, respectively force components, acting on the fuel cell stack in a plane parallel to the side wall adjacent to the respective retainer plate can cause a movement of the middle plate. The link element can be configured to allow the stack mount attached to the middle plate to follow these movements. The link element can be rigid so that a movement of the fuel cell stack can cause an arc-shaped trajectory of the stack mount. The movement of the fuel cell stack relative to the retainer plate can be in the range of 0.1 mm to 1 mm, 1 mm to 5 mm, or 1 mm to 10 mm. Alternatively, this displacement can be defined in percentages of the dimension of the fuel cell stack in the corresponding direction, e.g., height for a vertical movement range and/or width for a horizontal movement range. Thereto, the range can be 0.1 % to 1%, 1% to 5%, or 1% to 10%. For the respective range the arc shape can be approximated as a linear movement parallel to the corresponding fuel cell stack side wall. Alternatively, the link element can be configured to linearly shift the stack mount in relation to the connector element, i.e., shift the stack mount parallel to the fuel cell stack side surface.

Furthermore, the fuel cell stack can have a width variation due to manufacturing and/or assembly tolerances. With a width variation of the fuel cell stack, also the position of the middle plate can vary horizontally, i.e., perpendicular to the stacking direction and in plane with the corresponding side surface facing the retainer plate. The stack mount can be configured to receive the middle plate in a predefined width interval.

According to an embodiment the connector element can form the isolation element or comprise the isolation element. The isolation element can be configured to electrically isolate the support assembly from the fuel cell stack. Preferably, the isolation element can be configured to prevent a current flow from the side surface of the fuel cell stack facing the retainer plate to the base plate. In particular, the isolation element can be configured to prevent a current flow through the retainer plate. Further the stack mount can form the isolation element and can be configured to attach to the fuel cell stack in a non-conductive manner. Additionally or alternatively, the link element can form the isolation element. Further, the retainer plate can comprise an isolation section forming the isolation element. The isolation section can be formed integrally with the retainer plate. Preferably, the retainer plate can be configured to electrically isolate the stack mount from the base plate, respectively an attachment of the support assembly at the first end of the fuel cell stack. The retainer plate can be disposed such that a predetermined clearance to the fuel cell stack, in particular the corresponding side surface of the fuel cell stack can be established. The retainer plate can be disposed such that a predetermined clearance and creepage distance can be established.

In a further embodiment, the support assembly can comprise an isolating layer, preferably a coating disposed on a side surface of the retainer plate oriented towards the fuel cell stack. The retainer plate can comprise the isolating layer. The isolation layer can form a surface of the retainer plate, preferably a surface facing the fuel cell stack. The complete surface of the retainer plate can be coated with the isolating layer. The isolating layer can be an isolating sheet disposed between the fuel cell stack and the retainer plate.

The retainer plate can comprise a recess at the mounting end to receive a part of the first end of the fuel cell stack extending perpendicular to the stacking direction.

The retainer plate can be formed to adhere to a shape of the fuel cell stack. The retainer plate can comprise a form fit with a bottom section of the fuel cell stack. Thereby, a distance the retainer plate protrudes from the side surface of the fuel cell stack can be minimized. Additionally or alternatively, the retainer plate, specifically the mounting end, can be disposed spaced apart from the side surface of the fuel cell stack to maintain a predetermined distance to prevent arching from the fuel cell stack to the retainer plate.

In a further embodiment, the retainer plate comprises a first side wall which can be configured to align parallel to the side surface of the fuel cell stack when the retainer plate is attached to the base plate. The retainer plate can further comprise a second side wall disposed opposite of the first side wall. Preferably, the second side wall can be inclined with respect to the first side wall.

Thereto, the retainer plate can be asymmetrically shaped such that the thickness of the retainer plate decreases from the mounting end to the connecting end. Thereby, forces acting on the connecting end can be efficiently transferred to the mounting end. Preferably, a stiffness of the retainer plate can be maximized with respect to the available installation space and/or a predefined weight limit for the support assembly. Preferably, the thickness decreases continuously, e.g., linearly towards the connecting end. As an alternative to the inclined second side wall, the second side wall can comprise an inclined support structure, e.g., ribs, beams, protrusions, or other structural components configured to support a load applied to the connecting end. The support structure can be configured to increase in height in reference to a surface normal of the side surface of the fuel cell stack from the connecting end to the mounting end. The support structure can be embedded into the retainer plate, e.g., it can be integrally formed with the retainer plate.

In a further embodiment, the support assembly can comprise a secondary connecting means disposed in between the mounting end and the connecting end preferably along the stacking direction. The support assembly can further comprise a secondary stack mount configured to attach to the fuel cell stack between a first end of the fuel cell stack and an attachment point of the stack mount to the fuel cell stack along the stacking direction. The secondary stack mount can further be configured to attach to the secondary connecting means to connect the retainer plate to the fuel cell stack.

Any embodiments relating to the stack mount can be correspondingly realized for the secondary stack mount. Further, any embodiment relating to the connecting end, specifically, the connector element, link element and/or slide mount, can be correspondingly realized for the secondary connecting means.

The secondary connecting means can provide an additional support connection to the fuel cell stack. A fuel cell stack exceeding a predetermined height along the stacking direction can be supported by more than one attachment point to the support structure. The support assembly can comprise a plurality of stack mounts each configured to attach to the fuel cell stack. The fuel cell stack can provide an attachment means for the respective stack mount to attach to. Any embodiment relating to the middle plate can be correspondingly realized for each of the plurality of attachment points.

According to a further preferred embodiment, the mounting end can comprise a plurality of spaced apart mounting arms, preferably two mounting arms. Each amounting rm can be configured to receive a base fastener to fixedly attach the corresponding mounting arm to the base plate.

The connector arms can be configured to horizontally spread a load applied to the support structure at the connecting end. In particular the force can be received, respectively countered by each of the connector arms being attached to the base plate. The connector arms can be configured to increase the torsional stiffness of the retainer plate. The connector arms can be integrally formed with a retainer plate, preferably the connector arms can form the mounting end.

According to a second aspect the present invention relates to a fuel cell stack assembly which can comprise a fuel cell stack. The fuel cell stack can comprise a plurality of fuel cells stacked adjacent to one another along the stacking direction. A first end and a second end can be configured to limit the length of the plurality of fuel cells along the stacking direction.

The fuel cell stack assembly can further comprise a support assembly according to any embodiment of the first aspect.

The support assembly can comprise a base plate configured to attach to the first end of the fuel cell stack and a retainer plate which comprises a mounting end configured to mount the retainer plate to the base plate adjacent to the first side wall and parallel to a stacking direction of the fuel cell stack. Additionally, the retainer plate can comprise a connecting end disposed at a predetermined position between the first end of the fuel cell stack and the second end of the fuel cell stack along the stacking direction, and a stack mount configured to attach to the fuel cell stack and attach to the connecting end to connect the retainer plate to the fuel cell stack at the connecting end preferably in a load-bearing manner.

The first end of the fuel cell stack can be a first cell of the fuel cell stack. Additionally or alternatively, the first end can comprise a first end plate configured to attach to the base plate. Similarly, the second end of the fuel cell stack can be a last fuel cell of the fuel cell stack. Additionally or alternatively, the first end can comprise a first end plate configured to attach to a top plate. The top plate and base plate can be configured to apply a compression force to the fuel cell stack. Specifically, the fuel cell stack assembly can comprise tensioning means configured to attach to the base plate and the top plate, and to exert a tensioning force onto the fuel cell stack along the stacking direction.

The fuel cell stack can comprise a middle plate which can be disposed centrally in the fuel cell stack along the stacking direction. Preferably, the middle plate can be disposed at the middle of the fuel cell stack with respect to the stacking direction. The middle plate can be a functional part of the fuel cell stack, e.g., a bipolar plate. The middle plate can be configured to attach to the stack mount. Additionally or alternatively the stack mount can be configured to receive the middle plate. Preferably, the stack mount can be configured to clamp to the middle plate. The middle plate can be configured to protrude from a side surface of the fuel cell stack. Preferably, the side surface of the fuel cell stack can be formed by uniformly positioned fuel cells such that the combined edges of the fuel cells form the respective side surfaces.

The fuel cell stack can comprise a cell row assembly comprising a stack of fuel cells. A fuel cell can comprise a bipolar plate (BPP) and a membrane electrode assembly which can be stacked one above the other. The cell row assembly can be held together by a compressive force acting along the stacking direction, e.g., a force equilibrium can be reached by equal forces being applied to the first end of the fuel cell stack and the second end of the fuel cell stack. A BPP can consist of an anode side and a cathode side. For example, the BPP can comprise a cathode unipolar plate and an anode unipolar plate, e.g. a unipolar plate on each side.

The middle plate can comprise a unipolar plate on each side. For example, the middle plate can comprise a cathode unipolar plate facing the second end of the fuel cell stack, and an anode unipolar plate facing the first end of the fuel cell stack. This arrangement is to keep continuity with the other cells with minimal performance losses. Furthermore, the middle plate can be slightly thicker than the rest of the BPP to provide bending stiffness to the retainer plate. Alternatively, the fuel cell stack can comprise a casing having a central attachment point configured to attach to the stack mount.

In a further embodiment of the fuel cell stack assembly, the fuel cell stack can comprise a first side surface and a second side surface. The mounting end can be configured to mount the retainer plate to the base plate adjacent to the first side surface and preferably parallel to the stacking direction of the fuel cell stack. The support assembly can comprise a secondary retainer plate comprising a secondary mounting end configured to mount the secondary retainer plate to the base plate adjacent to the second side surface and preferably parallel to a stacking direction of the fuel cell stack. The support assembly can comprise a secondary connecting end disposed at a second predetermined position between the first end of the fuel cell stack and the second end of the fuel cell stack along the stacking direction.

The first side surface and the second side surface can be arranged adjacent to each other. For example, the first side surface and the second side surface can form a vertical edge of the fuel cell stack. Alternatively, the first side surface and the second side surface can be disposed opposite to each other. Thereto, the first side surface and the second side surface can be disposed parallel to each other. Fuel cell stack

In a further embodiment, the fuel cell stack can comprise a third side surface with correspondingly disposed support assembly components, e.g., a third retainer plate. The fuel cell stack can additionally comprise a fourth side surface with correspondingly disposed support assembly components, e.g., a fourth retainer plate.

The side surfaces of the fuel cell stack can form a continuous side wall between the first end and the second end. Each side surface can be comprised of a set of edges of the stacked fuel cells. The side surfaces can form a rectangular shape.

### BRIEF DESCRIPTION OF THE DRAWINGS

The subject matter will hereinafter be described in conjunction with the following drawing figures, wherein like numerals denote like elements, and wherein:
Fig. 1 is a schematic representation of forces acting on a fuel cell stack in accordance with an embodiment of the invention;
Fig. 2 is a schematic representation of the support structure in accordance with an embodiment of the invention;
Fig. 3 is a schematic representation of a side view of the fuel cell stack assembly in accordance with an embodiment of the invention;
Fig. 4 is a schematic representation of a further side view of the fuel cell stack assembly in accordance with an embodiment of the invention;
Fig. 5 is a schematic representation of the link element, the connector element, and the stack mount in accordance with an embodiment of the invention;
Fig. 6 is a schematic representation of the support assembly in accordance with an embodiment of the invention;
Fig. 7 is a schematic representation of the stack mount, link element and connector element in accordance with an embodiment of the invention;
Fig. 8 is a schematic representation of the stack mount, link element, connector element and retainer plate in accordance with an embodiment of the invention;
Fig. 9A is a schematic representation of the stack mount, link element, connector element and retainer plate in accordance with an embodiment of the invention;
Fig. 9B is a schematic representation of the stack mount, link element, connector element and retainer plate in accordance with an embodiment of the invention;
Fig. 9C is a schematic representation of the stack mount, link element, connector element and retainer plate in accordance with an embodiment of the invention;
Fig. 10A is a schematic representation of the stack mount, first axle and link element in accordance with an embodiment of the invention;
Fig. 10B is a schematic representation of the stack mount, first axle, link element and connector element in accordance with an embodiment of the invention;
Fig. 11A is a schematic representation of a first attachment step of the support assembly in accordance with an embodiment of the invention;
Fig. 11B is a schematic representation of a second attachment step of the support assembly in accordance with an embodiment of the invention;
Fig. 11C is a schematic representation of a third attachment step of the support assembly in accordance with an embodiment of the invention;
Fig. 12A is a schematic perspective representation of the fuel cell stack assembly in accordance with an embodiment of the invention;
Fig. 12B is a schematic side view representation of the fuel cell stack assembly in accordance with an embodiment of the invention;
Fig. 13A is a schematic sectional bottom view of the support assembly in accordance with an embodiment of the invention; and
Fig. 13B is a schematic sectional side view of the support assembly in accordance with an embodiment of the invention.

### DETAILED DESCRIPTION OF THE DRAWINGS

The following detailed description is merely exemplary in nature and is not intended to limit the invention and uses of the invention. Furthermore, there is no intention to be bound by any theory presented in the preceding background or the following detailed description.

The representations and illustrations in the drawings are schematic and not to scale. Like numerals denote like elements.

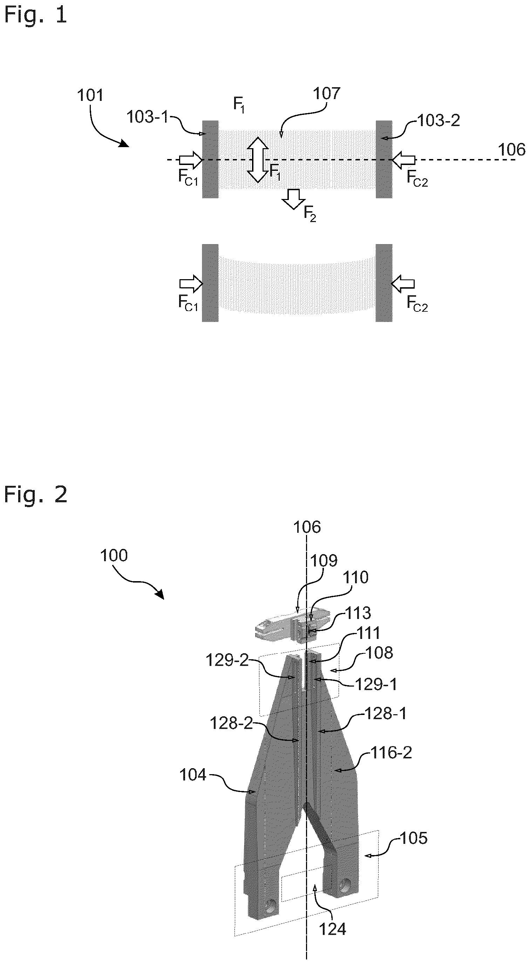

Fig. 1 comprises a schematic representation of a fuel cell stack 101 and forces acting on the fuel cell stack 101. The fuel cell stack comprises a plurality of fuel cells 107 stacked adjacent to one another. The fuel cell stack 101 can be delimited by a first end 103-1, e.g., a first end plate and a second end 103-2, e.g., a second end plate. The fuel cell stack 100 can be subject to vibrational forces F₁. The vibrational forces can be dynamic, i.e., changing direction, specifically orthogonal to a stacking direction. The vibrational forces can be superimposed with further static forces, e.g. gravitational forces F₂, and/or dynamic forces, e.g., due to accelerations and decelerations. In particular, static components can lead to a predominant deformation direction. For example, random vibrational components superimposed with a constant orientation of the fuel cell stack with respect to gravity can lead to a predominant deformation parallel to the gravitational forces.

The plurality of fuel cells stacked on top of one another in the stacking direction can be held together by the first end plate and the second end plate. For example, by compression forces F_{C1}, F_{C2} exerted by the end plates 103-1, 103-2, which acts in the stacking direction 106. The fuel cell stack 101 can preferably be arranged vertically or horizontally with respect to gravity.

In the shown embodiment, the fuel cell stack 101 is arranged horizontally, so that the surface planes of the individual fuel cells of the arrangement run vertically and the gravitational vector acts in or along the respective surface planes. The fuel cells in the arrangement 107 are pressed together by the end plates 103-1, 103-2, by a clamping load F_{C1}, F_{C2}, which acts along the stack direction 106. The upper part of Fig. 1 shows the fuel cell stack 101 in a first state, where the fuel cells of the arrangement are still positioned neatly next to each other as intended and without relative lateral displacement.

The subsequent state illustrates the fuel cell stack 101 after the start of operation. Operation, for example in an aircraft, causes vibrations within the fuel cell stack 101. At the same time, the gravitational vector F₂ acts perpendicular to the stack direction of the fuel cell stack. However, additional forces, such as centrifugal forces during the flight of an aircraft, can also act instead of or in addition to the gravitational force. Due to the vibrations and the additional force, the fuel cell stack 101 can bend over time in the direction of the additional force, in that the individual fuel cells shift relative to each other perpendicular to the stacking direction. This is shown in the last state. Such a deflection can lead to damages and or a failure of the fuel cell stack 101.

Fig. 2 depicts a schematic representation of the support structure in accordance with an embodiment of the present invention. The support assembly 100 can comprise a retainer plate 104 that includes a mounting end 105 configured to mount the retainer plate 104 to a base plate to arrange the retainer plate 104 parallel to a stacking direction 106 of the fuel cell stack 101 when the fuel cell stack 101 is disposed on the base plate. The retainer plate 104 also has a connecting end 108 disposed at a predetermined distance from the mounting end 105 and a stack mount 109 configured to attach to the fuel cell stack 101 between a first end and a second end of the fuel cell stack, and to attach to the connecting end to connect the retainer plate 104 to the fuel cell stack 101 at the connecting end 108. The retainer plate 104 is delimited by the mounting end 105 and the connecting end 108.

The retainer plate 104 comprises a recess 124 at the mounting end 105 configured to receive a part of the first end of the fuel cell stack extending perpendicular to the stacking direction. Generally, the mounting end can be formed to accommodate the fuel cell stack while simultaneously providing rigidity between the mounting end 104 and the connecting end 108. The retainer plate 104 can be A-shaped. In other embodiments, the retainer plate can be X-shaped, H-shaped, I-shaped, L-shaped, Z-shaped, U-shaped, or inverted U-shaped, Y-shaped, T-shaped, or inverted T-shaped.

The retainer plate 1 04can be shaped to transfer forces from a single contact point or contact surface at the connecting end to a laterally extended contact surface and/or at least two spaced apart contact points or contact surfaces at the mounting end 105. A lateral direction can relate to a direction perpendicular to the stacking direction 106 and parallel to the corresponding side surface of the fuel cell stack. Alternatively, the lateral direction can be along a width of the retainer plate104.

The retainer plate 104 can comprise a support rib 128-1, preferably two support ribs 128-1, 128-2, extending along the stacking direction and protruding from a surface of a sidewall 116-2 of the retainer plate 104. The support rib s 128-1, 128-2 can be configured to stiffen the retainer plate 104, e.g., increase a rigidity of the retainer plate 104 to forces applied perpendicular to the stacking direction 106 and also to reduce weight significantly. The support ribs 128-1, 128-2 can be integrally formed with the retainer plate 104. Additionally, part of the support ribs 128-1, 128-2 can form mounting supports 129-1, 129-2 for the connector element 110. The connector element 110 can be disposed between two support ribs 128-1, 128-2. Preferably, the connector element 110 can be fixedly attached to the retainer plate 104 by fasteners engaging in the support ribs and the connector element 110. Specifically, fasteners can be inserted laterally through the support ribs and engage the connector element 110, e.g., engage in corresponding faster receivers of the connector element 110. The support ribs can also be removed if the retainer plate itself can provide stiffness like bionic shaped structure with the same benefits like weight reduction as that of ribbed structure.

The Thickness of the retainer plate 104 can be decreasing from the mounting end 105 to the connecting end 108.

The retainer plate can be non-conductive. This can be achieved by a coating and/or use of a non-conductive base material. Additionally or alternatively, a non-conductive break can be comprised in the retainer plate isolating the connecting end 108 from the mounting end 105.

The embodiment provides a half height stack support structure, which can function similarly to a full stack support structure by reducing or preventing stack bending. This present design can require fewer parts, achieve a weight reduction of more than 50 % preferably more than 70 %. Additionally the invention can provide an increased strength-to-weight ratio and it may simplify attachment to the middle plate and accommodate stack manufacturing tolerances.

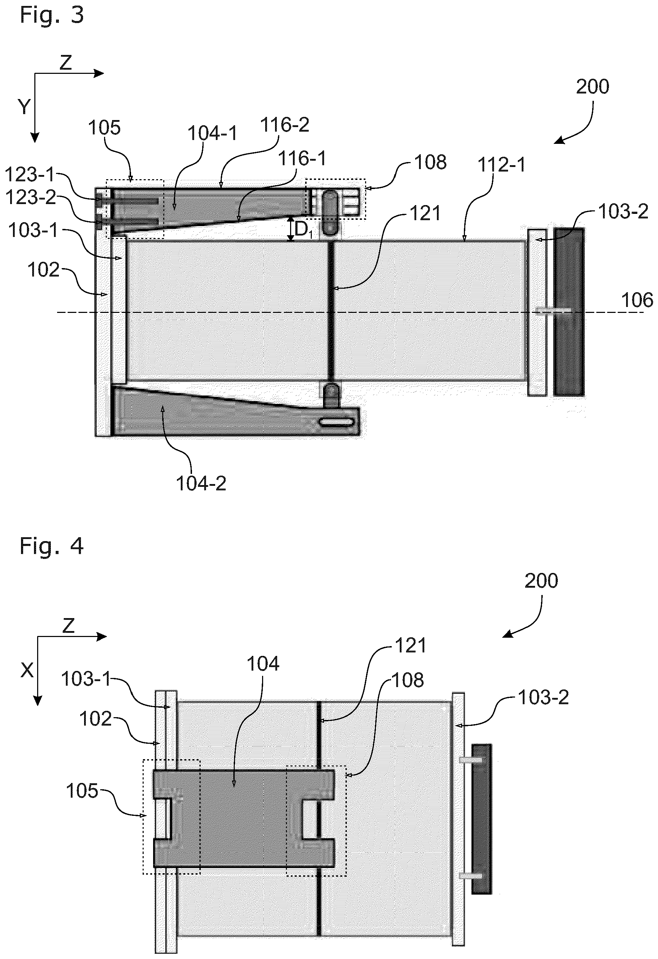

Fig. 3 depicts a schematic side view of the fuel cell stack assembly 200 in accordance with an embodiment of the invention. The stacking direction 106 can be oriented parallel to a Z-axis. The thickness of a first retainer plate 104-1 can decrease along the Z-axis. Preferably, the thickness can decrease till the connecting end 108, which can be constant in thickness. With decreasing thickness a distance D₁ between the first retainer wall 104-1 and a first side surface 112-1 of the fuel cell stack 101 can increase. Thereto, a first side wall 116-1 can be angled with respect to the first side surface 112-1. A second side wall 116-2 can be parallel with respect to the first side surface 112-1. A base plate 102 can extend in the X-direction and Y-direction having a thickness in the Z-direction. The base plate 102 can extend past the first end 103-1 of the fuel cell stack 100, in particular extending in the Y-direction. The mounting end 105 can be attached to the base plate 102 with an interface in the X-Y-plane, i.e., the mounting end 105 attaches onto the base plate 102 along the Z-direction. The mounting end 105 can be configured to receive base fasteners 123-1, 123-2, preferably along the Z-direction. The base fasteners 123-1, 123-2 can be spaced apart along the Y-direction. The connector end 108 can be configured to extend past an attachment point of the stack mount 109 with the fuel cell stack 101, e.g., the middle plate 121.

The fuel cell stack 101 can be supported by two retainer plates 104-1, 104-2, which can be adjacently disposed along the Y-direction. In an example, where a gravitational force is directed in a positive Y-direction, the retainer plate 104-1 can be configured to accept a pulling force and the further retainer plate 104-1 can be configured to accept a compressive force. The combined attachment of the retainer plates 104-1, 104-2 can stabilize the middle plate 121 against relative movement with respect to the first end 103-1 and/or the second end 103-2.

Fig. 4 shows a further perspective, specifically a top view, of the fuel cell stack assembly 200 in accordance with an embodiment. The connector end 108 can comprise two attachment points with the fuel cell stack 101, e.g., at the middle plate 121. The attachment points can be contact surfaces configured to frictionally attach to the fuel cell stack 101. Further, the contact surfaces can be spaced apart along the X-direction, e.g., the contact surfaces can be symmetrical with respect to a central axis or central point of the fuel cell stack 101. The retainer plate 104 can be centrally disposed on the X-Axis with respect to the fuel cell stack 101.

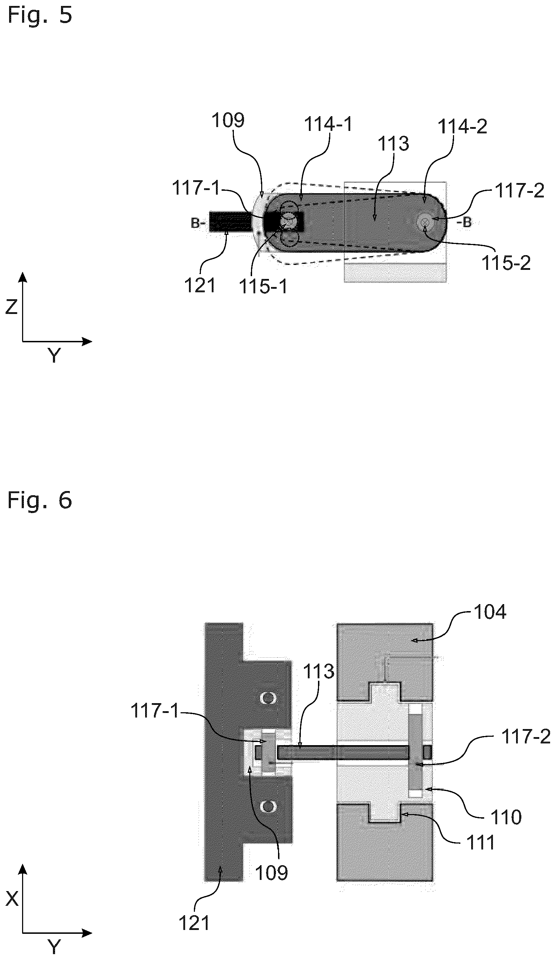

Fig. 5 shows a schematic representation of the link element 113, the connector element 110 and the stack mount 109 in accordance with an embodiment. The shown schematic can be an enlargement of an aspect shown in Fig. 3 between the markings "B-" and "-B. The link element can be provided in different length steps, e.g., in steps of 1 mm or lower. The length can be defined along the Y-direction.

Fig. 5 illustrates the link element 113 in three different pivot positions with respect to the second rotation axis 115-2. The link element 113 includes a first link end 114-1, which is configured to attach pivotably to the stack mount 109, and a second link end 114-2, configured to attach pivotably to the connector element 110. The first link end 114-1 pivots with respect to a first rotation axis 115-1, which is oriented perpendicular to the stacking direction 106. The first and second rotation axes are parallel to each other.

The support assembly comprises a first axle 117-1 configured to rotatably connect the first link end 114-1 with the stack mount 109. The support assembly further includes a second axle 117-2 configured to rotatably connect the second link end 114-2 with the connector element 110. The link element can be configured to vary a position of the first end 114-1 along the Z-direction and thereby also a position of the stack mount 109 along the Z-direction. The stack mount 109 can thereby adjust to different positions of the middle plate 121 along the Z-direction. Minimal shifts in the Y-direction, when the first link end 114-1 moves with respect to the Z-direction can either be negligible or can be compensated by the stack mount 109. For example, a clamp attachment to the middle plate can allow a sufficient slide or may be adjustable in the Y-direction. The movability can remain when the connector element 110 is fixedly attached to the retainer plate. Specifically, micromovements in the Z-direction can be followed by the stack mount 109due to the flexible connection to the connector element 110.

Fig. 6 is a schematic representation of the support assembly 100 in accordance with an embodiment. Specifically, Fig. 6 shows the slide mount 111 in form-fit engagement with the connector element 110, The slide mount 111 can comprise a groove structure and the connector element 110 can comprise a corresponding rail structure configured to engage in the groove. Also, the stack mount 109 is spaced apart with respect to the slide mount 111, respectively the connector element 110. The distance can be determined by the length of the link element 113.

The middle plate 121 can comprise fastener receptacles configured to receive fasteners. Also the stack mount can comprise corresponding faster receptacles which align with the fastener receptacles of the middle plate 121, when mounted.

The stack mount 109 locks the position of the first axle 117-1 along the first rotation axis 115-1 when attached to the fuel cell stack 101. The stack mount 109 receives the first axle 177-1 along the first rotation axis 115-1. When the middle plate 121 is received by the stack mount 109, movement of the first axle 115-1 along the first rotation axis 115-1 is prevented or limited.

The slide mount 111 locks the position of the second axle 117-2 along the second rotation axis 115-2 when the connector element 110 is received by the slide mount 111. The connector element 110 receives the second axle 117-2 along the second rotation axis 115-2, with an axle receptacle configured to receive the second axle 117-2 along the second rotation axis 115-2. The second axle receptacle is a through-hole with openings facing the slide mount 111, which are covered when the connector element 110 is inserted, locking the second axle 117-2 in position.

The middle plate 121 can comprise a receptacle configured to receive a part of the stack mount 109. In particular a part that comprises the link element. Thereby, the protrusions on each side of the receptacle, can lock the first axle. 117-1.

The stack mount 109 can be mounted to the middle plate 121 by fasteners, specifically screws. Thereby, the stack mount 109 can clamp onto the middle plate 121. The fastener receivers of the middle plate 121 can be oblong to allow for a positional adjustment during assembly. The fastener receivers can be oblong perpendicular to a stacking direction, i.e., in the Y-direction.

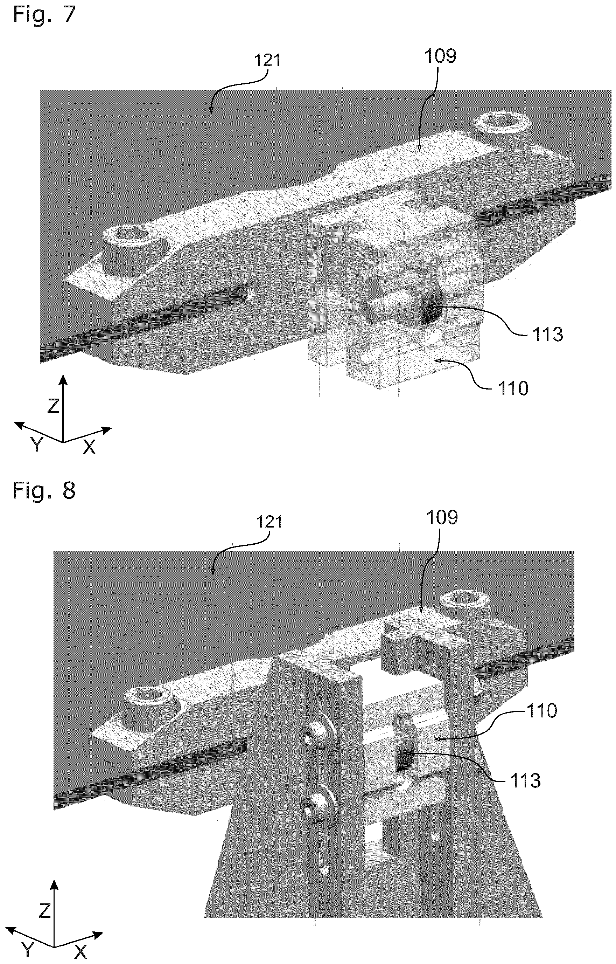

Fig. 7 is a schematic perspective representation of the stack mount, link element and connector element in accordance with an embodiment. Each shown component, e.g., the stack mount 109, the connector element 1110, and/or the link element can act as an electric insulator, i.e., can be configured to electrically isolate the fuel cell stack 101 from the retainer plate 104.

Fig. 8 is a further schematic representation of the embodiment according to Fig. 7 further comprising the retainer plate 104 and fixation means configured to fixedly attach the connector element 110 to the slide mount, respectively lock a position of the connector element 110 relative to the slide mount 111, specifically along the stacking direction 106. The fixation means can be a plurality of fasteners. Each side of the connector element 110 can be attached with two fasteners.

The combination of the slide mount 111 to movably receive the connector element 110 and the link element 113 connecting the stack mount 109 and the connector element 110 allows for independent adjustment of the stack mount 109 position along the stacking direction 106 and along a surface normal of the adjacent fuel cell stack 101 side surface. For example, the connector element 110 can slide parallel to the stacking direction 106 while maintaining a constant distance between the connector element 110 and the stack mount 109, defined parallel to a surface normal of the adjacent fuel cell stack 101 side surface. The stack mount 109 can be positioned within an area defined by the length of the slide mount, the maximum rotation angles of the first and second link ends 114-1, 114-2, or the maximum elastic deflection of the link element 113. The link element 113 can provide additional degrees of freedom, such as ball mounting or flexible configuration in two dimensions, defining an adjustment volume in which the stack mount 109 can be placed while attached to the retainer plate.

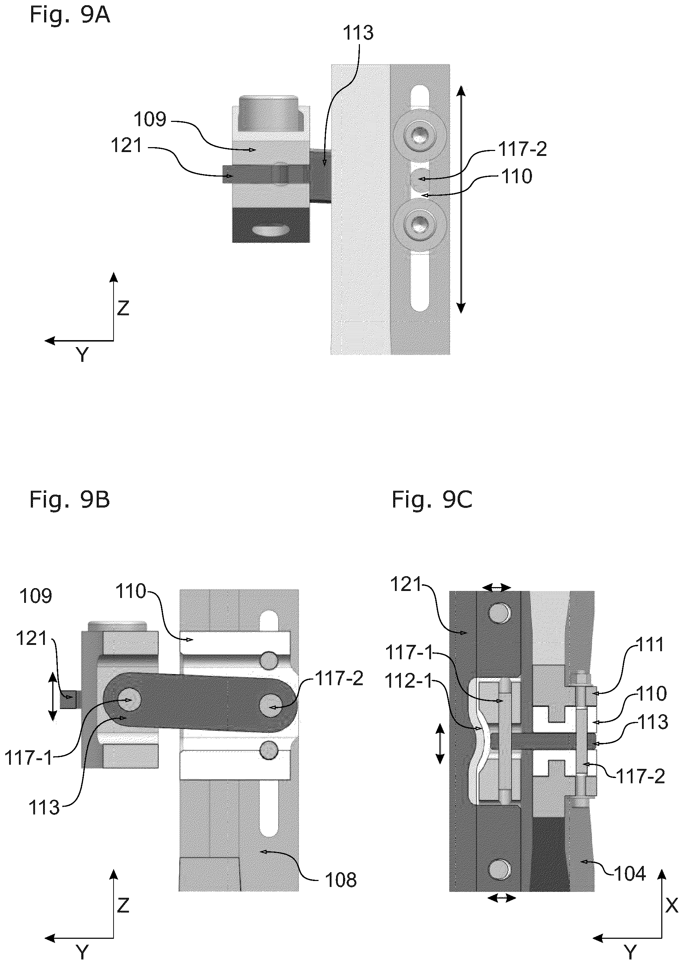

Fig. 9A depicts a schematic side view of the connecting end 108 with attached link element 113 and stack mount 109. The fasteners can be attached to the connector element 110. In particular, the fasteners can engage in a connecting oblong hole in the stacking direction 106, respectively the Z-direction. The fasteners can be configured to fix an orientation of the connector element relative to the retainer plate 104. With loose fasteners, the connector element 110 can slide along a predetermined length along the stacking direction. Thereby, the connector element can be adjusted, preferably during an assembly process, to match a position and/or shape of the fuel cell stack. Due to manufacturing and/or assembly tolerances of the fuel cell stack, its position relative to the support assembly and/or its dimensions can vary. The different dimensions can impact the attachment surfaces, points and/or the middle plate 121 position. Thereto, the position of the connector element 110 relative to the retainer plate and thereby relative to the fuel cell stack can be adjusted accordingly, to match the respective position.

The stack mount 109, the retainer plate 104 and/or the connector element 110 can be symmetrically formed with a central Z-Y-plane as the symmetry plane.

Fig. 9B depicts a schematic sectional side view of the support assembly 100 according to the embodiment of Fig. 9A. The link element 113 is oriented at an angle with respect to the Y-axis. Any such shift of the link element 113 causes the stack mount 109 to shift along the Z-axis.

The stack mount 109 comprises a first mounting receptacle 118-1 configured to receive the first axle 115-1 slidably along the first rotation axis, i.e., parallel to the X-axis. The first mounting receptacle 118-1 receives the first link end 113-1 along a connecting axis perpendicular to the first rotation axis, i.e., the Y-axis. The first mounting receptacle can be a through hole configured to allow a limited rotational movement of the link element 113.

The connector element 110 can comprise a second mounting receptacle 118-2 configured to receive the second axle 115-2 slidably, along the second rotation axis, i.e., along the X-axis. a Further, the second mounting receptacle 118-2 receives the second link end along a further connecting axis perpendicular to the second rotation axis, e.g., the Y-axis. The second mounting receptacle 118-2 can be configured to allow a limited rotational movement of the link element 113. The first mounting receptacle 118-1 and the second mounting receptacle 118-2 can be configured to jointly realize a limited motion range of the link element and thereby of the stack mount 109 relative to the connector element 110. The link element 113 can be configured to movably connect the stack mount to the connector element. During assembly, the stack mount 109 can be attached to the fuel cell stack, e.g., the middle plate 121. Preferably, the connector element 110 can be fixedly attached to the retainer plate 104 subsequent to attaching the stack mount 109 to the middle plate 121. Thereto, an optimal initial position, respectively orientation of the link element 113 can be determined, e.g., an initial angle of the link 113 element with respect to the Y-axis, i.e., perpendicular to the stacking direction.

With completed assembly, the connector element 110 can be fixedly attached at a predetermined position in the slide mount 111. The position can be predetermined according to the respective manufacturing and/or assembly deviation in dimensions (length, width, height) of the fuel cell stack mounted to the base plate.

Fig. 9C depicts a schematic sectional top view of the support assembly 100 according to the embodiment of Fig. 9A and 9B. The stack mount 109 can be configured to allow for a positional variation and/or size variation of the fuel cell stack, respectively the corresponding attachment points and/or surfaces, e.g., the middle plate 121 along the X-direction. Thereto, fastener receptacles can be configured oblong to allow for the positional variance. A difference along the Y-axis can be accounted for by changing the angle of the link element 113. With an increasing angle of the link element 113 with respect to the Y-axis, the distance between the stack mount 109 and the connector element 110 can be shortened. To keep a position along the Z-axis constant the connector element can adjust correspondingly with respect to the retainer plate 104. For example, the connector plate 1110 can slide a corresponding distance in the slide mount 111.

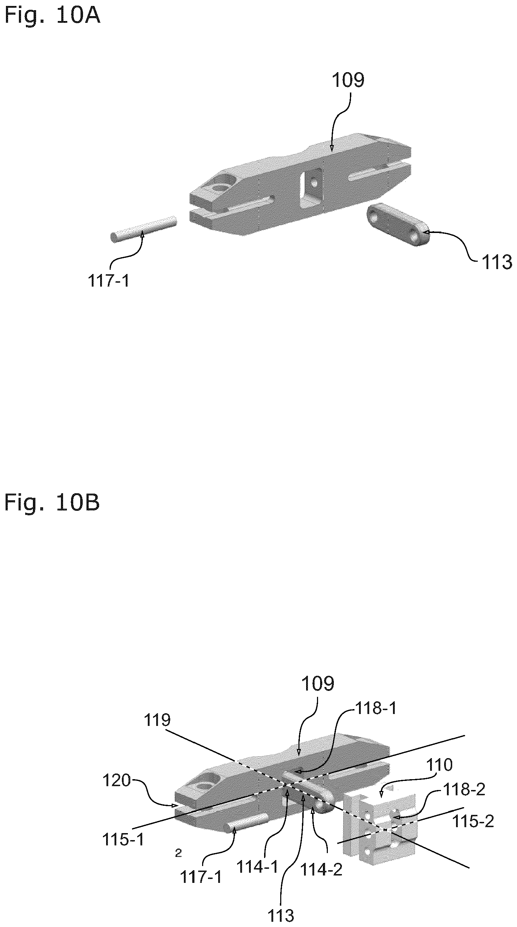

Fig. 10A is a schematic representation of the stack mount 109, first axle 117-1 and the link element 113 in accordance with an embodiment. During assembly, the link element 113 can slide into the first mounting receptacle 118-1. Following, the first axis 117-1 can slide into the stack mount 109. Thereto, the stack mount 109 can comprise a guide rail, i.e., a groove configured to positionally guide the first axle 117-1 to its mounting position in the first mounting receptacle 118-1. The first axle 117-1 can engage the link element 113 in the first mounting receptacle 118-1 to rotatably hold the link element 113 in the first mounting receptacle 118-1.

Fig. 10B is a schematic representation of the stack mount 109, first axle 117-1 and the link element 113 in accordance with the embodiment shown inf Fig 10A also comprising the connector element 110. The connector element 110 can receive the link element 113 in the second mounting receptacle 118-2, preferably, once the link element 113 is connected to the stack mount 109, e.g., via the first axle 117-2. The connector element 110 can comprise three through-holes, where the two outer holes form fastener receptacles and the central hole forms an axle receptacle. The link end 113 can rotate with respect to the first and second rotation axes 115-1 and 115-2.

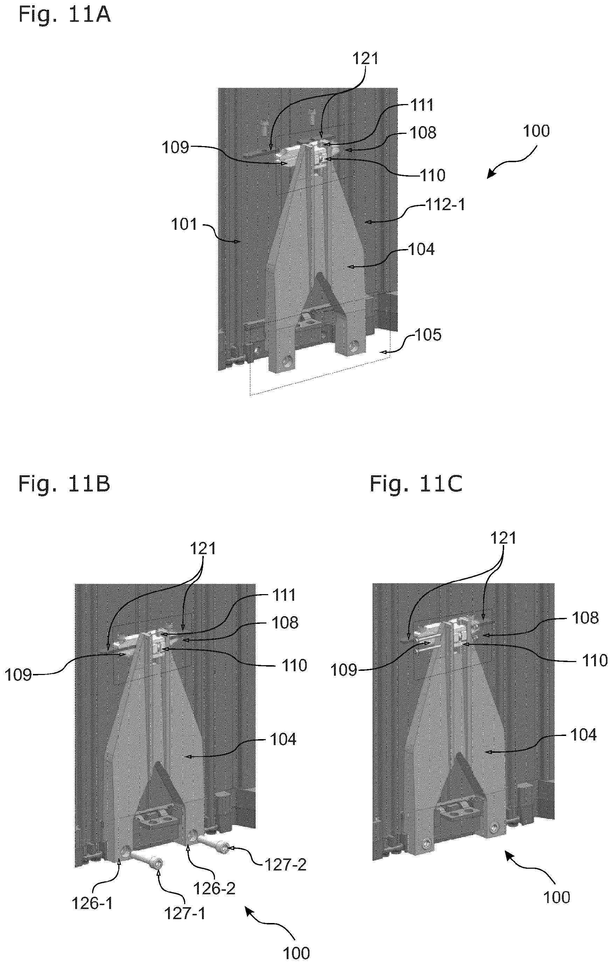

FIG. 11A to 11C depict three steps of an attachment sequence of the support assembly 100. In a first step, the assembled support assembly 100 can be attached to the fuel cell stack 101, in particular by clamping to the middle plate 121. Clamping can be achieved by tensioning two fasteners, e.g., one on each side of the stack mount 109 along an extension of the stack mount 109 along the X-axis. In a second step, the support assembly 100 can be attached to the first end 103-1 and/or the base plate 102 as shown in Fig. 11B. In a subsequent third step, the position of the connector element 110 in the slide mount 110 can be fixed, in particular by connecting and fastening the connector element 110 to the retainer plate 104, i.e., by screws preferably with corresponding screw nuts as shown in Fig. 11C.

The mounting end 108 can comprise two mounting arms 126-1, 126-2. Each mounting arm 126-1, 126-2 can be configured to receive a base fastener 127-1, 127-2 to fixedly attach the corresponding mounting arm to the base plate.

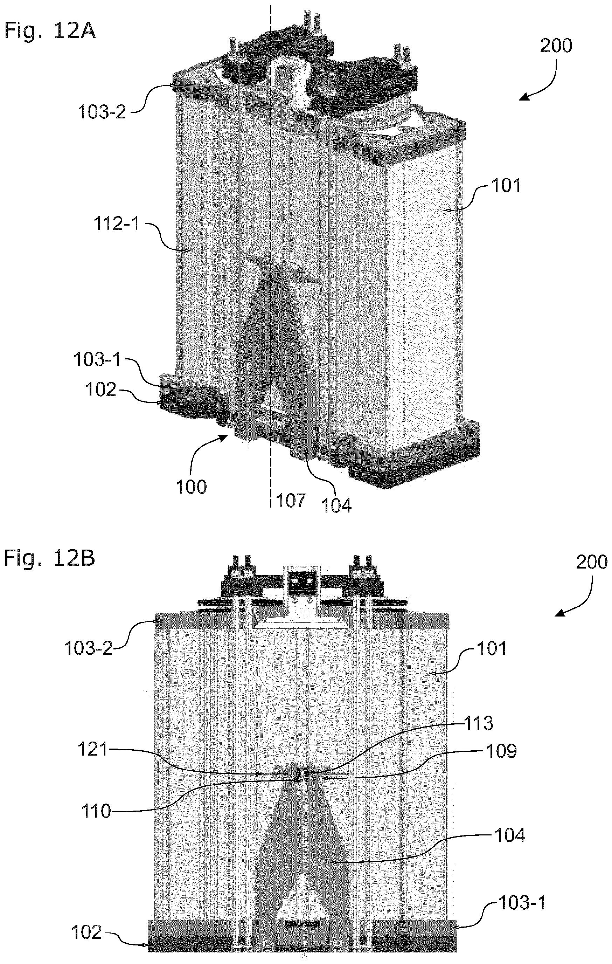

Fig. 12A and 12B show a schematic perspective representation (12A), respectively a schematic side view representation (12B) of the fuel cell stack assembly 200. The support assembly 100 extends up to a middle position of the fuel cell stack 101, preferably attaching to the middle plate 121. The support assembly 100 is further attached to the base plate 102 and positioned in between two tensioning elements connecting the first end 103-1 and the second end 103-2.

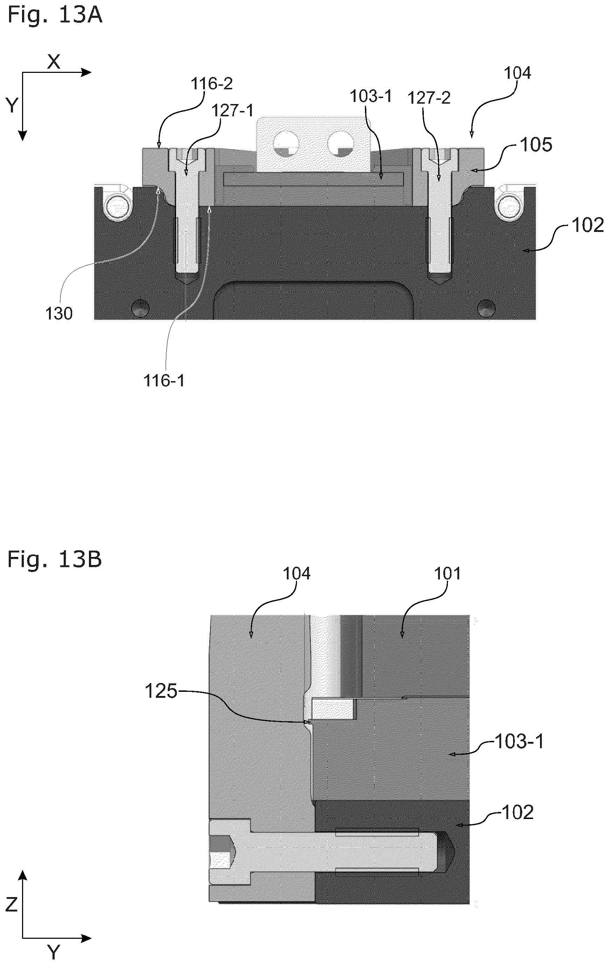

Fig. 13A is a schematic sectional bottom view of the support assembly in accordance with an embodiment and Fig. 13B is a schematic sectional side view of the support assembly in accordance with the embodiment shown in Fig. 13A. The retainer plate 104 is attached to the base plate by fasteners, i.e., screws which are received in corresponding holes in the base plate 102. The base plate 102 and the retainer plate 104, specifically the mounting end 105 can form a form-fit attachment, i.e., the corresponding contact surfaces can follow their respective forms.

This can increase the attachment surface area, increasing force transfer and rigidity. Also, the base plate 102 and the mounting end 105 can be configured to self-center. For example edge sections of the base plate 102 and the mounting end 105 can be formed to guide the position of the retainer plate 104 during mounting to the base plate, such that the screw holes of the mounting end 105 and the screw holes in the base plate 102 align. This can increase assembly efficiency and reduce misalignments.

The first side wall 116-1 can comprise a profile 130, e.g., receptacles and protrusions, configured to engage in a form-fit, or at least a partial form-fit with the base plate 102, the first end, and/or the fuel cell stack. Thereby, structural stiffness can be increased while minimizing installation space, specifically the thickness of the support assembly.

As shown in Fig. 13B, the retainer plate 104, respectively the mounting end 105 can comprise a clearance recess configured to distance the surface of the retainer plate 104 from elements of the fuel cell stack 101.

## Claims

1. Support assembly (100) for a fuel cell stack (101), comprising
a retainer plate (104) comprising:
a mounting end (105) configured to mount the retainer plate (104) to a base plate (102) to arrange the retainer plate (104) parallel to a stacking direction (106) of the fuel cell stack (101) when the fuel cell stack (101) is disposed on the base plate (102);
a connecting end (108) disposed at a predetermined distance from the mounting end (105)
a stack mount (109) configured to
attach to the fuel cell stack (101) between a first end (103-1) and a second end (103-2) of the fuel cell stack (101)., and
attach to the connecting end (108) to connect the retainer plate (104) to the fuel cell stack (101) at the connecting end (108);
wherein the retainer plate (104) is delimited by the mounting end (105) and the connecting end (108).

2. Support assembly (100) according to claim 1,
comprising the base plate (102) configured to receive a first end of the fuel cell stack (101);
wherein the connecting end (105) is disposed
adjacent to a side surface (112-1) of the fuel cell stack (101) when the first end (103-1) is received by the base plate (102), and
between the first end (103-1) of the fuel cell stack (101) and a second end (103-2) of the fuel cell stack (101) along the stacking direction.

3. Support assembly (100) according any one of the preceding claims, comprising
a connector element (110), configured to attach to the connecting end (108),
wherein the connecting end (108) comprises a slide mount (111) configured to slidably receive the connector element (110);
wherein the slide mount (111) and the connector element (110) are interlocking forming a positive locking connection where the connector element (110) is slidable along the stacking direction (106).

4. Support assembly (100) according to any one of the preceding claims, comprising a link element (113) configured to connect the connecting end (108) and the stack mount (109), wherein the link element (113) comprises
a first link end (114-1) configured to pivotably attach to the stack mount (109); and
a second link end (114-2) configured to pivotably attach to the connector element (110);
wherein the first link end (114-1) is configured to pivot with respect to a first rotation axis (115-1) perpendicular (angled with respect) to the stacking direction (106); and wherein the second link end (114-2) is configured to pivot with respect to a second rotation axis (115-2) perpendicular (angled with respect) to the stacking direction (106).

5. Support assembly (100) according to claim 4, comprising a first axle (117-1) configured to rotatably connect the first link end (114-1) with the stack mount (109), wherein the stack mount (109) is configured to lock a position of the first axle (117-1) along the first rotation axis (115-1) when the stack mount (109) is attached to the fuel cell stack (101).

6. Support assembly (100) according to any one of claims 4 or 5, comprising a second axle (117-2) configured to rotatably connect the second link end (114-2) with the slide mount (111), wherein the slide mount (111) is configured to lock a position of the second axle (117-2) along the second rotation axis (115-2) when the connector element (110) is received at least up to a position of the second axle (117-2) by the slide mount (111).

7. Support assembly (100) according to any one of claims 5 or 6, wherein the stack mount (109) comprises
a first mounting receptacle (118-1) configured to
receive the first axle (117-1) (slidably) along the first rotation axis (115-1); rotatably hold the first axle (117-1); and
receive the first link end (114-1) along a connecting axis (119-1) perpendicular to the first rotation axis (115-1).

8. Support assembly (100) according to any one of claims 6 or 7, wherein the connector element (110) comprises
a second mounting receptacle (118-2) configured to
receive the second axle (117-2) (slidably) along the second rotation axis (115-2);
rotatably hold the second axle (117-2); and
receive the second link end (114-2) along a further connecting axis (119-2) perpendicular to the second rotation axis (115-2).

9. Support assembly (100) according to any one of the preceding claims, wherein the stack mount (109) comprises
a plate receptacle (120) configured to receive a middle plate (121) of the fuel cell stack (101);
(a plate fastener (122) configured to fixedly attach the stack mount (109) to the middle plate (121)); and
wherein the plate receptacle (120) is configured to lock a position of the first axle (117-1) along the first rotation axis (115-1) when the plate receptacle (120) is mounted to the middle plate (121).

10. Support assembly (100) according to any one of the preceding claims, comprising an isolation element configured to electrically isolate the support assembly from the fuel cell stack.

11. Support assembly (100) according to any one of the preceding claims, wherein the retainer plate (104) comprises a recess (124) at the mounting end (105) to receive a part (125) of the first end (103-1) of the fuel cell stack (101) extending perpendicular to the stacking direction (106).

12. Support assembly (100) according to any one of the preceding claims, wherein the retainer plate comprises
a first side wall (116-1) configured to align parallel to the side surface (112-1) of the fuel cell stack (101) when the retainer plate (104) is attached to the base plate (102), and
a second side wall (116-2) disposed opposite of the first side wall (116-1);
wherein the second side wall (116-2) is inclined with respect to the first side wall (116-1).

13. Support assembly (100) according to any one of the preceding claims, comprising
a secondary connecting means disposed in between the mounting end (105) and the connecting end (108) along the stacking direction (106), and
a secondary stack mount configured to
attach to the fuel cell stack (101) between a first end (103-1) of the fuel cell stack (101) and an attachment point of the stack mount (109) to the fuel cell stack (101) along the stacking direction (106), and
attach to the secondary connecting means to connect the retainer plate (104) to the fuel cell stack (101).

14. Fuel cell stack assembly (200), comprising
a fuel cell stack (101), comprising
a plurality of fuel cells (107) stacked adjacent to one another along a stacking direction (106);
a first end (103-1) and a second end (103-2) limiting the length of the
plurality of fuel cells along the stacking direction (106);
a middle plate (121);
a support assembly (100), comprising
a base plate (102) configured to attach to a first end (103-1) of the fuel cell stack (101);
a retainer plate (104) comprising:
a mounting end (105) configured to mount the retainer plate (104) to a base plate (102) to arrange the retainer plate (104) parallel to a stacking direction 106) of the fuel cell stack (101) when the fuel cell stack (101) is
disposed on the base plate (102);
a connecting end (108) disposed at a predetermined distance between the first end (103-1) of the fuel cell stack (101) and the second end (103-2) of the fuel cell stack (101) along the stacking direction (106).
a stack mount (109) configured to
attach to the fuel cell stack (101) between the first end (103-1) and the second end (103-2) of the fuel cell stack (101)., and
attach to the connecting end (108) to connect the retainer plate (104) to the fuel cell stack (101) at the connecting end (108);
wherein the retainer plate (104) is delimited by the mounting end (105) and the connecting end (108).

15. Fuel cell stack assembly (200) according to claim 14,
wherein the fuel cell stack (101) comprises a first side surface (112-1) and a second side surface (112-2),
wherein the mounting end (105) is configured to mount the retainer plate (104) to the base plate (102) adjacent to the first side surface (112-1) and preferably parallel to the stacking direction (106) of the fuel cell stack (101);
wherein the support assembly (100) comprises a secondary retainer plate (104-2) comprising:
a secondary mounting end configured to mount the secondary retainer plate (104-2) to the base plate (102) adjacent to the second side surface (112-2);
a secondary connecting end disposed at a second predetermined position between the first end (103-1) of the fuel cell stack (101) and the second end (103-2) of the fuel cell stack along the stacking direction (106).
